# EUROPEAN PATENT SPECIFICATION

(11) **EP 4 601 039 B1**
(45) Date of publication and mention of the grant of the patent: **28.10.2026**
(21) Application number: 23898386.0
(22) Date of filing: 01.12.2023
(51) Int. Cl.: H01M 4/131, H01M 4/1391, H01M 4/525, H01M 10/052, H01M 4/02, C01G 53/00, C01G 53/506, C01G 53/42

(54) **POSITIVE ELECTRODE ACTIVE MATERIAL, POSITIVE ELECTRODE SLURRY INCLUDING THE SAME, POSITIVE ELECTRODE, AND LITHIUM SECONDARY BATTERY**
POSITIVELEKTRODENAKTIVMATERIAL, POSITIVELEKTRODENAUFSCHLÄMMUNG DAMIT, POSITIVELEKTRODE UND LITHIUMSEKUNDÄRBATTERIE
MATÉRIAU ACTIF D'ÉLECTRODE POSITIVE, SUSPENSION D'ÉLECTRODE POSITIVE LE COMPRENANT, ÉLECTRODE POSITIVE ET BATTERIE SECONDAIRE AU LITHIUM

(30) Priority: 02.12.2022 KR 20220166990; 02.12.2022 KR 20220166991
(43) Date of publication of application: 13.08.2025
(73) Proprietor: LG Energy Solution, Ltd., Seoul 07335 (KR)
(72) Inventor: OH, Su Yeon, Daejeon 34122 (KR); LHO, Eun Sol, Daejeon 34122 (KR); HWANG, Jin Tae, Daejeon 34122 (KR); PARK, Byung Chun, Daejeon 34122 (KR); PARK, Sang Min, Daejeon 34122 (KR); LEE, Sang Wook, Daejeon 34122 (KR); KIM, Seul Ki, Daejeon 34122 (KR); KIM, Hyeong Il, Daejeon 34122 (KR)
(74) Representative: Hoffmann Eitle
(86) International application number: PCT/KR2023/019689
(87) International publication number: WO 2024/117863

(56) References cited:
- EP-A1- 4 553 928
- JP-A- 2018 501 602
- KR-A- 20190 095 927
- KR-A- 20200 100 475
- KR-A- 20210 124 181
- KR-B1- 102 126 898
- ZHANG MAOLIN ET AL: "Effect of micron sized particle on the electrochemical properties of nickel-rich LiNi0.8Co0.1Mn0.1O2 cathode materials", CERAMICS INTERNATIONAL, ELSEVIER, AMSTERDAM, NL, vol. 46, no. 4, 23 October 2019 (2019-10-23), pages 4643 - 4651, XP086007041, ISSN: 0272-8842, [retrieved on 20191023], DOI: 10.1016/J.CERAMINT.2019.10.195

## Description

### TECHNICAL FIELD

### Cross-reference to Related Applications

This application claims the benefit of priority from Korean Patent Application Nos. 10-2022-0166990 and 10-2022-0166991, filed on December 02, 2022.

### Technical Field

The present invention relates to a positive electrode active material, a positive electrode slurry including the same, a positive electrode, and a lithium secondary battery.

### BACKGROUND ART

Demand for secondary batteries as an energy source has been significantly increased as technology development and demand with respect to mobile devices have increased. Among these secondary batteries, lithium secondary batteries having high energy density, high voltage, long cycle life, and low self-discharging rate have been commercialized and widely used.

Lithium transition metal composite oxides have been used as a positive electrode active material of the lithium secondary battery, and among these oxides, research and development on lithium nickel-based oxides, with which large-capacity batteries are easily implemented, are being conducted more actively. However, the form of the secondary particles has a limitation in that the generation of cracks in the positive electrode active material is intensified during charging and discharging.

In order to solve such a limitation, a technique for preparing a positive electrode active material in the form of single particles rather than secondary particles by increasing a firing temperature during the preparation of lithium nickel-based oxides has been proposed.

However, the positive electrode active material in the form of single particles has a limitation in that the interface between particles, which makes a passage for moving lithium ions, is less, and the lithium diffusion path inside the particles is long, so that the resistance is high and the output is low. Therefore, conventionally, the positive electrode active material is formed to have an average particle diameter of the particles of 5.0 µm or less, thereby minimizing an increase in resistance and a decrease in output of the positive electrode active material in the form of single particles.

However, in order to make the average particle diameter of the positive electrode active material in the form of single particles be 5.0 µm or less, a pulverization process should be performed with a strong break strength. There is a limitation in that in this process, a large amount of fine powder is generated, and thus, the phase stability of the slurry is rapidly deteriorated. M. Zhang et al. (Ceramics International, 2020, 46, 4643-4651) describes an LiNi_{0.8}Co_{0.1}Mn_{0.1}O₂ positive electrode active material having a specific particle size distribution. EP 4 553 928 A1 describes a positive electrode active material including a lithium transition metal composite oxide in a form of a single particle.

### DISCLOSURE OF THE INVENTION

### TECHNICAL PROBLEM

An aspect of the present invention provides a positive electrode active material having excellent phase stability and electrochemical properties of a slurry through particle size distribution optimization of the positive electrode active material, a positive electrode slurry including the same, a positive electrode, and a lithium secondary battery.

### TECHNICAL SOLUTION

According to an aspect of the present invention, there is provided a positive electrode active material including a lithium nickel-based oxide which is a single particle composed of one single nodule, a quasi-single particle which is a composite formed of at most 30 nodules, or a combination thereof, wherein the nodule is a single crystal which lacks a crystalline grain boundary or a polycrystal having no grain boundary in appearance when observed in the view at a magnification of 5,000 to 20,000 using a scanning electron microscope (SEM), wherein the positive electrode active material has a D₉₀ of 8.0 µm to 11.5 µm, and a negative skewness factor (NSF) represented by Equation 1 below is 0.20 to 0.35: [Equation 1] $NSF = \left({D}_{50}-{D}_{10}\right) / {I}_{max}$

In Equation 1 above, D₅₀ is a particle diameter at a cumulative volume of 50% in a volume cumulative particle size distribution graph of the positive electrode active material, D₁₀ is a particle diameter at a cumulative volume of 10% in a volume cumulative particle size distribution graph of the positive electrode active material, and Iₘₐₓ is a maximum volume fraction in the volume cumulative particle size distribution graph of the positive electrode active material.

The positive electrode active material has a D₅₀ of 5.0 µm to 7.0 µm.

The positive electrode active material has a D₁₀ of 2.5 µm to 3.1 µm.

The lithium nickel-based oxide may be represented by Formula 1 below:

[Formula 1] Li_{1 +x}NiₐCo_{b}M¹_{c}M²_{d}O₂

In Formula 1 above, M¹ is Mn, Al, or a combination thereof, M² is at least one selected from the group consisting of Ba, Ca, Zr, Ti, Mg, Ta, Nb, and Mo, 0≤x≤0.50, 0.80≤a<1.00, 0<b<0.20, 0<c<0.20, and 0≤d≤0.20.

In Formula 1 above, 0.83≤a<1.00, 0<b<0.17, 0<c<0.17, and 0≤d≤0.17 may be satisfied.

The positive electrode active material may have a tap density of at least 2.32 g/cc.

According to another aspect of the present invention, there is provided a positive electrode slurry including the above-described positive electrode active material.

The positive electrode slurry may have a solid content of 65 wt% to 75 wt%.

The positive electrode slurry may have a viscosity of 2,000 cp to 5,000 cp as measured at a shear speed of 16 rpm at 40 °C.

According to another aspect of the present invention, there are provided a positive electrode including the above-described positive electrode active material, and a lithium secondary battery.

The lithium secondary battery may have a capacity retention of at least 88% after charging and discharging for 50 cycles when charging the lithium secondary battery to 4.25 V at 0.5 C at 45 °C and discharging it to 3.0 V at 1.0 C are set as one cycle.

### ADVANTAGEOUS EFFECTS

In the positive electrode active material according to the present invention, because NSF and D₉₀ satisfy a specific range, a tap density may be increased while small particles fill in spaces between relatively large particles, and excellent phase stability is achieved due to the low viscosity of the slurry, and thus outstanding processability may be achieved.

Additionally, the positive electrode active material according to the present invention includes single particles and/or quasi-single particles having excellent particle strength to thus have less particle breakage during rolling, thereby achieving excellent life characteristics.

In addition, if the particle size distribution according to the present invention is satisfied, even though the positive electrode active material has the form of single particles and/or quasi-single particles, the resistance increase rate is low and excellent output performance may be achieved.

### MODE FOR CARRYING OUT THE INVENTION

It will be understood that terms or words used in the present specification and claims shall not be construed as being limited to having meanings defined in commonly used dictionaries, but should be interpreted as having meanings and concepts consistent with the technical idea of the present invention based on the principle that an inventor may appropriately define concepts of the terms to best explain the invention.

As used herein, the term "single particle" refers to a particle composed of one single nodule. As used herein, the term "quasi-single particle" refers to a particle that is a composite particle formed of at most 30 nodules.

As used herein, the term "nodule" refers to a particle unit body constituting single particles and quasi-single particles, and the nodule may be a single crystal which lacks a crystalline grain boundary, or may be a polycrystal having no grain boundary in appearance when observed in the view at a magnification of 5,000 to 20,000 using a scanning electron microscope (SEM). The average particle diameter of the nodules may be determined with an arithmetic mean value of the particle diameters of each nodule measured using a scanning electron microscope (SEM).

As used herein, the term "secondary particle" refers to a particle formed by aggregation of tens to hundreds of primary particles. More specifically, the secondary particle is an aggregate of at least 40 primary particles.

The expression "particle" used herein may include any one or all among a single particle, a quasi-single particle, a primary particle, a nodule, and a secondary particle.

As used herein, the terms "D₁₀," "D₅₀," and "D₉₀" refer to particle sizes based on 10%, 50%, and 90% of the volume cumulative particle size distribution of the positive electrode active material, respectively. The D₁₀, D₅₀, and D₉₀ may be measured using a laser diffraction method. For example, powder of positive electrode active materials may be dispersed in a dispersion medium, then introduced into a commercially available laser diffraction particle size measuring apparatus (e.g., Microtrac MT 3000), irradiated with an ultrasonic wave of about 28 kHz at a 60-W output. Then, after a volume cumulative particle size distribution graph may be obtained, particle sizes corresponding to 10%, 50%, and 90% of the volume cumulative amount may be determined to measure the D₁₀, D₅₀, and D₉₀, respectively.

Hereinafter, the present invention will be described in more detail.

### Positive Electrode Active Material

The positive electrode active material according to the present invention includes a single particle composed of one single nodule, a quasi-single particle which is a composite of at most 30 nodules, or a combination thereof.

Since the lithium nickel-based oxides in the form of single particles and/or quasi-single particles have higher particle strength than the conventional lithium nickel-based oxide in the form of secondary particles in which tens to hundreds of primary particles are aggregated, there is less particle breakage during rolling.

In addition, the lithium nickel-based oxide in a single-particle or quasi-single-particle form according to the present invention has less number of sub-components (*i.e.,* nodules) constituting the particles, thereby reducing changes due to volume expansion and contraction of the primary particles during charging and discharging, and thus significantly reducing cracks within the particles.

In particular, the inventors of the present invention have found that when a positive electrode active material having a negative skewness factor (NSF) and D₉₀ satisfying a certain range is applied, due to the particle size distribution optimization, the phase stability of a slurry may be improved, particle breakage may be minimized in the electrode manufacturing process to reduce gas generation, a change in crystal structure may be minimized during the charging and discharging, a diffusion distance of lithium ions in the particles may be reduced to achieve low initial resistance characteristics, and the energy density may be improved by maximizing a tap density.

The positive electrode active material according to the present invention may have D₉₀ of 8.0 µm to 11.5 µm, 9.0 µm to 11.0 µm, or 9.5 µm to 10.5 µm.

In addition, the positive electrode active material according to the present invention may have an NSF value of 0.20 to 0.35, 0.21 to 0.35, or 0.21 to 0.34.

According to the study of the present inventors, it was found that when both the D₉₀ and NSF values satisfy the above range, middle particles became large particles and particle size distribution was optimized and thus the viscosity of the slurry was generally low and the tap density was high. On the other hand, when both the D₉₀ and the NSF values do not satisfy the above range, it was found that because of the problem of the existing small particles, the viscosity of the slurry was high and the tap density was low. When only one of the D₉₀ or the NSF values satisfies the above range, it was found that the viscosity of the slurry was low, but the particle size distribution was not optimized, and thus the tap density decreased.

Specifically, when the D₉₀ of the positive electrode active material is less than 8.0 µm, the specific gravity of the fine particles may increase and the phase stability of the slurry may be deteriorated, and when it is greater than 11.5 µm, the distribution of particles having a large amount of coarse particles and a low degree of single-particle formation may increase.

Meanwhile, the positive electrode active material according to the present invention may have a D₅₀ of 5.0 µm to 7.0 µm, 5.5 µm to 6.5 µm, 5.4 µm to 6.5 µm, or 5.6 µm to 6.2 µm.

The positive electrode active material in the form of single particles commercialized to date has generally a D₅₀ of 5.0 µm or less. However, in order to form the D₅₀ small, a pulverization process with a strong break strength should be performed, and in this process, a large amount of fine particles are generated, and thus, the phase stability of the slurry is rapidly deteriorated. Therefore, according to the present invention, the D₅₀ is formed to be relatively larger than that of the related art, thereby enabling the pulverization process to be performed at a relatively low break pressure, thus making it possible to reduce the amount of fine particles generated in the pulverization process.

Specifically, when the D₅₀ is less than 5.0 µm, the amount of fine particles generated may increase, thereby deteriorating the phase stability of the slurry, and when it is greater than 7.0 µm, the lithium diffusion passage in the particles may be lengthened, thereby deteriorating resistance and output performance.

Meanwhile, the positive electrode active material according to the present invention may have a D₁₀ of 2.5 µm to 3.1 µm, 2.6 µm to 3.1 µm, or 2.7 µm to 3.1 µm. When the D₁₀ is less than 2.5 µm or greater than 3.1 µm, the effect of improving the phase stability of the slurry may be insignificant.

Meanwhile, the positive electrode active material according to the present invention may include a lithium nickel-based oxide having a composition as shown in Formula 1 below:

[Formula 1] Li_{1 +x}NiₐCo_{b}M¹_{c}M²_{d}O₂

In Formula 1 above, M¹ is Mn, Al, or a combination thereof, M² is at least one selected from the group consisting of Ba, Ca, Zr, Ti, Mg, Ta, Nb, and Mo, 1.0≤x≤0.50, 0.80≤a<1.00, 0<b<0.20, 0<c<0.20, and 0≤d≤0.20.

1+x above denotes a molar ratio of lithium in the lithium nickel-based oxide, and may satisfy 0≤x≤0.50, 0≤x≤0.30, or 0≤x≤0.20.

a above denotes a molar ratio of nickel among all metals excluding lithium in the lithium nickel-based oxide, and may satisfy 0.80≤a<1.00,0.83≤a<1.00, or 0.86≤a<1.00.

b above denotes a molar ratio of cobalt among all metals excluding lithium in the lithium nickel-based oxide, and may satisfy 0<b<0.20, 0<b<0.17, or 0<b<0.15.

c above denotes a molar ratio of the M¹ among all metals excluding lithium in the lithium nickel-based oxide, and may satisfy 0<c<0.20, 0<c<0.17, or 0<c<0.15.

d above denotes a molar ratio of the M² element among all metals excluding lithium in the lithium nickel-based oxide, and may satisfy 0≤d≤0.20, 0≤d≤0.17, or 0≤d≤0.15.

The positive electrode active material according to the present invention may have a tap density of at least 2.32 g/cc, at least 2.40 g/cc, or at least 2.43 g/cc. When the tap density of the positive electrode active material according to the present invention satisfies the above range, the amount of fine particles is small so that the phase stability of the slurry may be improved and excellent electrochemical properties may be achieved.

The positive electrode active material of the present invention as described above may be prepared by mixing a positive electrode active material precursor and a lithium raw material and then firing the mixture.

In this case, the positive electrode active material precursor may be used by purchasing a commercially available positive electrode active material precursor, or may be prepared according to a method of preparing a precursor which is known in the art.

For example, the precursor may be prepared by forming a transition-metal aqueous solution and an ammonium cation complex, injecting a basic compound into a reactor, stirring the mixture, and performing a co-precipitation reaction.

The transition-metal aqueous solution may be prepared by dissolving a raw material containing transition metals in a solvent such as water, for example, dissolving a nickel-containing raw material, a cobalt-containing raw material, or a manganese-containing raw material in water. In addition, if necessary, the transition metal aqueous solution may further include an aluminum-containing raw material.

Meanwhile, the transition metal-containing raw material may be an acetate, a carbonate, a nitrate, a sulfate, a halide, a sulfide, or an oxide of the transition metal.

Specifically, the nickel-containing raw material may be, for example, NiO, NiCO₃·2Ni(OH)₂·4H₂O, NiC₂O₂·2H₂O, Ni(NO₃)₂·6H₂O, NiSO₄, NiSO₄·6H₂O, a nickel halide, or a combination thereof.

The cobalt-containing raw material may be, for example, CoSO₄, Co (OCOCH₃)₂·4H₂O, Co (NO₃)₂·6H₂O, CoSO₄·7H₂O, or a combination thereof.

The manganese-containing raw material may be, for example, Mn₂O₃, MnO₂, Mn₃O₄, MnCO₃, Mn(NO₃)₂, MnSO₄·H₂O, a manganese acetate, a manganese halide, or a combination thereof.

The aluminum-containing raw material may be, for example, Al₂O₃, Al(OH)₃, Al(NO₃)₃, Al₂(SO₄)₃, (HO)₂AlCH₃CO₂, HOAl(CH₃CO₂)₂, Al(CH₃CO₂)₃, an aluminum halide, or a combination thereof. However, Al may not be added to the transition-metal aqueous solution, but may be added together with the lithium raw material in the firing step which will be described later.

Meanwhile, a forming agent of the ammonium cation complex may include at least one compound selected from the group consisting of NH₄OH, (NH₄)₂SO₄, NH₄NO₃, NH₄Cl, CH₃COONH₄, and (NH₄)₂CO₃, and may be introduced into the reactor in the form of a solution in which the compound is dissolved in a solvent. In this case, as the solvent, water or a mixture of water and an organic solvent (specifically, alcohol etc.), which may be uniformly mixed with the water, may be used.

The basic compound may be at least one compound selected from the group consisting of NaOH, KOH, and Ca(OH)₂, and may be introduced into the reactor in the form of a solution in which the compound is dissolved in a solvent. In this case, as the solvent, water or a mixture of water and an organic solvent (specifically, alcohol etc.), which may be uniformly mixed with the water, may be used.

As described above, when the transition-metal aqueous solution, the forming agent of the ammonium cation complex, and the basic compound are introduced into the reactor and stirred, the transition metals in the transition-metal aqueous solution are co-precipitated to generate precursor particles in the form of a transition metal hydroxide.

In this case, the transition-metal aqueous solution, the forming agent of the ammonium cation complex, and the basic compound are added in an amount such that the pH of the reaction solution is within a desired range.

When the precursor particles are formed by the above method, the positive electrode active material precursor is separated and obtained from the reaction solution. For example, the positive electrode active material precursor may be separated from the reaction solution by filtering the reaction solution, and then the separated positive electrode active material precursor may be washed with water and dried to obtain the positive electrode active material precursor. In this case, as necessary, processes such as pulverizing and/or classifying may be performed.

Next, the positive electrode active material precursor is mixed with a lithium raw material and then fired to prepare a lithium nickel-based oxide. In this case, if necessary, the aluminum-containing raw material and/or the M¹ metal-containing raw material may be mixed together and fired.

As the lithium raw material, a lithium-containing sulfate, a nitrate, an acetate, a carbonate, an oxalate, a citrate, a halide, a hydroxide, an oxyhydroxide, or the like may be used, and for example, Li₂CO₃, LiNO₃, LiNO₂, LiOH, LiOH ·H₂O, LiH, LiF, LiCl, LiBr, LiI, CH₃COOLi, Li₂O, Li₂SO₄, CH₃COOLi, Li₃C₆H₅O₇, or a mixture thereof may be used.

Meanwhile, the lithium raw material and the positive electrode active material precursor may be mixed so that the molar ratio of Li and the total metal in the precursor is in a ratio of 1:1 to 1.2:1, preferably 1:1 to 1.1:1. When the mixing ratio of the lithium raw material and the metal in the positive electrode active material precursor satisfies the above range, the layered crystal structure of the positive electrode active material is well developed, and thus the positive electrode material having excellent capacity characteristics and structural stability may be prepared.

Meanwhile, the firing is performed under the condition that the grain of the Positive electrode active material is grown so as to satisfy the particle size distribution range of the present invention.

The appropriate firing temperature may vary with the metal composition in the precursor, and for example, when the nickel (Ni) content is at least 86 mol%, the firing temperature may be 700 °C to 1,000 °C, 800 °C to 900 °C, or 820 °C to 880 °C.

In addition, the firing may be performed for 1 hour to 15 hours, 6 hours to 15 hours, or 10 hours to 15 hours under an air or oxygen atmosphere. In the present specification, the oxygen atmosphere refers to an atmosphere containing a sufficient amount of oxygen for firing, the atmosphere including an air atmosphere. In particular, it is preferable to perform the primary firing in an atmosphere having an oxygen partial pressure higher than the air atmosphere.

After the firing, it is preferable to perform a pulverization process for controlling to have a desired particle size distribution. In this case, the pulverization may be performed through general pulverization known in the art, for example, a ball mill, a jet mill, or the like. When the above pulverization process is performed, the particle diameter of the positive electrode active material may be controlled more appropriately.

The pulverization may be performed in a pressure range of 2.0 bar to 4.0 bar, 2.2 bar to 3.8 bar, or 2.4 bar to 3.5 bar.

In addition, the pulverization may be performed at a speed range of 1,000 rpm to 3,000 rpm, 1,200 rpm to 2,800 rpm, or 1,300 rpm to 2,500 rpm.

The positive electrode active material prepared by performing the above-mentioned pressure range and speed range may be appropriately controlled such that D₁₀, D₅₀, and/or D₉₀ satisfy a certain range, thereby achieving excellent phase stability and electrochemical properties of the slurry.

### Positive Electrode Slurry

Next, the positive electrode slurry according to the present invention will be described.

The positive electrode slurry according to the present invention includes the positive electrode active material according to the present invention. The positive electrode slurry according to the present invention may optionally include a conductive agent and a binder together with the positive electrode active material as necessary. Specifically, the positive electrode slurry may be prepared by mixing a positive electrode active material, a conductive agent, and/or a binder in a solvent.

In this case, the positive electrode active material may be included in an amount of 80 wt% to 99 wt%, or 90 wt% to 98 wt% based on the total solid content of the positive electrode slurry.

The conductive agent is used to provide conductivity to the electrode, wherein any conductive agent may be used without particular limitation as long as it has suitable electron conductivity without causing adverse chemical changes in the battery. Specific examples of the conductive agent may be graphite such as natural graphite or artificial graphite; carbon based materials such as carbon black, acetylene black, Ketjen black, channel black, furnace black, lamp black, thermal black, and carbon fibers; powder or fibers of metals such as copper, nickel, aluminum, and silver; conductive tubes such as carbon nanotubes; conductive whiskers such as zinc oxide whiskers and potassium titanate whiskers; conductive metal oxides such as titanium oxide; or conductive polymers such as polyphenylene derivatives, and any one thereof or a mixture of two or more thereof may be used. The conductive agent may be included in an amount of 0.01 wt% to 10 wt%, 0.1 wt% to 9 wt%, or 0.1 wt% to 5 wt% based on the total solid content of the positive electrode slurry.

The binder serves to improve binding between positive electrode active material particles and the adhesion between the positive electrode active material and the current collector. Specific examples of the binder may be polyvinylidene fluoride (PVDF), polyvinylidene fluoride-hexafluoropropylene copolymer (PVDF-co-HFP), polyvinyl alcohol, polyacrylonitrile, polymethylmethacrylate, carboxymethyl cellulose (CMC), starch, hydroxypropyl cellulose, regenerated cellulose, polyvinylpyrrolidone, polytetrafluoroethylene, polyethylene, polypropylene, an ethylene-propylene-diene polymer (EPDM), a sulfonated EPDM, a styrene-butadiene rubber (SBR), a fluorine rubber, poly acrylic acid, and a polymer having hydrogen thereof substituted with Li, Na, or Ca, or various copolymers thereof, and any one thereof or a mixture of two or more thereof may be used. The binder may be included in an amount of 1 wt% to 30 wt%, preferably 1 wt% to 20 wt%, and more preferably 1 wt% to 10 wt% based on the total solid content of the positive electrode slurry.

The solvent may be a solvent normally used in the art. The solvent may include dimethyl sulfoxide (DMSO), isopropyl alcohol, N-methylpyrrolidone (NMP), dimethyl formamide (DMF), acetone, or water, and any one alone thereof or a mixture of two or more thereof may be used. An amount of the solvent used may be sufficient if the solvent may dissolve or disperse the positive electrode active material, the conductive agent, and the binder in consideration of a coating thickness of a positive electrode slurry and manufacturing yield, and may allow to have a viscosity that may provide excellent thickness uniformity during the subsequent coating for the preparation of the positive electrode.

The positive electrode slurry according to the present invention may have a solid content of 65 wt% to 75 wt%, 67 wt% to 74 wt%, or 69 wt% to 72 wt%.

The positive electrode slurry according to the present invention may have a viscosity, as measured at 16 rpm at 40 °C, of 2,000 cp to 5,000 cp, 2,400 cp to 4,000 cp, or 2,400 cp to 3,500 cp.

### Positive Electrode

Next, a positive electrode according to the present invention will be described.

The positive electrode according to the present invention includes a positive electrode active material layer including the positive electrode active material according to the present invention. For example, the positive electrode may include a positive electrode active material layer formed using the above-described positive electrode slurry according to the present invention. Since the positive electrode active material and the positive electrode slurry have been described above, a detailed description thereof will be omitted, and only the remaining configurations will be described in detail below.

The positive electrode current collector may include a metal having high conductivity, and is not particularly limited as long as the positive electrode active material layer easily adheres thereto and there is no reactivity in the voltage range of the battery. For example, stainless steel, aluminum, nickel, titanium, heat-treated carbon, or aluminum or stainless steel that is surface-treated with one of carbon, nickel, titanium, silver, or the like may be used as the positive electrode current collector. Also, the positive electrode current collector may typically have a thickness of 3 µm to 500 µm, and microscopic irregularities may be formed on the surface of the current collector to improve the adhesion of the positive electrode active material. The positive electrode current collector, for example, may be used in various shapes such as a film, a sheet, a foil, a net, a porous body, a foam body, and a non-woven fabric body.

The positive electrode may be prepared according to a typical method for preparing a positive electrode except that the above-described positive electrode active material is used. Specifically, the positive electrode may be prepared by applying the positive electrode slurry on the positive electrode current collector and then drying and rolling the same.

Alternatively, the positive electrode may be prepared by casting the positive electrode slurry on a separate support and then laminating a film separated from the support on the positive electrode collector.

### Lithium Secondary Battery

Next, a lithium secondary battery according to the present invention will be described.

The lithium secondary battery specifically includes a positive electrode, a negative electrode disposed to face the positive electrode, a separator disposed between the positive electrode and the negative electrode, and an electrolyte, wherein, since the positive electrode is the same as described above, detailed descriptions thereof will be omitted, and the remaining configurations will be only described in detail below.

Also, the lithium secondary battery may further optionally include a battery container which accommodates an electrode assembly of the positive electrode, the negative electrode, and the separator, and a sealing member which seals the battery container.

In the lithium secondary battery, the negative electrode includes a negative electrode collector and a negative electrode active material layer disposed on the negative electrode collector.

The negative electrode current collector is not particularly limited as long as it has high conductivity without causing adverse chemical changes in the battery, and, for example, copper, stainless steel, aluminum, nickel, titanium, heat-treated carbon, copper or stainless steel that is surface-treated with one of carbon, nickel, titanium, silver, or the like, and an aluminum-cadmium alloy may be used. Also, the negative electrode current collector may typically have a thickness of 3 µm to 500 µm, and as in the case of the positive electrode current collector, microscopic irregularities may be formed on the surface of the negative electrode current collector to enhance the adhesion of a negative electrode active material. For example, the negative electrode current collector may be used in various shapes such as a film, a sheet, a foil, a net, a porous body, a foam body, and a non-woven fabric body.

The negative electrode active material layer optionally includes a binder and a conductive agent in addition to the negative electrode active material.

A compound capable of reversibly intercalating and deintercalating lithium may be used as the negative electrode active material. Specific examples of the negative electrode active material may be a carbonaceous material such as artificial graphite, natural graphite, graphitized carbon fibers, and amorphous carbon; a metallic compound alloyable with lithium such as Si, Al, Sn, Pb, Zn, Bi, In, Mg, Ga, Cd, a Si alloy, a Sn alloy, or an Al alloy; a metal oxide which may be doped and undoped with lithium such as SiOx (0<x<2), SnO₂, vanadium oxide, and lithium vanadium oxide; or a composite including the metallic compound and the carbonaceous material such as a Si-C composite or a Sn-C composite, and any one thereof or a mixture of two or more thereof may be used. Also, a metallic lithium thin film may be used as the negative electrode active material. Furthermore, both low crystalline carbon and high crystalline carbon may be used as the carbon material. Typical examples of the low crystalline carbon may be soft carbon and hard carbon, and typical examples of the high crystalline carbon may be irregular, planar, flaky, spherical, or fibrous natural graphite or artificial graphite, Kish graphite, pyrolytic carbon, mesophase pitch-based carbon fibers, meso-carbon microbeads, mesophase pitches, and high-temperature heat-treated carbon such as petroleum or coal tar pitch derived cokes.

The negative electrode active material may be included in an amount of 80 wt% to 99 wt%, 82 wt% to 99 wt%, or 84 wt% to 99 wt% based on the total weight of the negative electrode active material layer.

The binder is a component that assists in the binding between the conductive agent, the active material, and the current collector, wherein the binder is commonly added in an amount of 0.1 wt% to 10 wt% based on the total weight of the negative electrode active material layer. Examples of the binder may include a polyvinylidene fluoride (PVDF), a polyvinyl alcohol, carboxymethyl cellulose (CMC), starch, hydroxypropyl cellulose, regenerated cellulose, polyvinylpyrrolidone, polytetrafluoroethylene, polyethylene, polypropylene, an ethylene-propylene-diene polymer (EPDM), a sulfonated EPDM, a styrene-butadiene rubber, a nitrile-butadiene rubber, a fluoro rubber, various copolymers thereof, and the like.

The conductive agent is a component for further improving the conductivity of the negative electrode active material, and may be included in an amount of 1 wt% to 30 wt%, 1 wt% to 20 wt%, or 1 wt% to 10 wt% with respect to the total weight of the negative electrode active material layer. The conductive agent is not particularly limited as long as it has conductivity without causing adverse chemical changes in the battery. For example, graphite such as natural graphite or artificial graphite; carbon black such as acetylene black, Ketjen black, channel black, furnace black, lamp black, and thermal black; conductive fibers such as carbon fibers or metal fibers; fluorocarbons; metal powder such as aluminum powder or nickel powder; a conductive whisker such as a zinc oxide whisker or a potassium titanate whisker; a conductive metal oxide such as a titanium oxide; or a conductive material such as a polyphenylene derivative; and the like may be used.

The negative electrode active material layer may be prepared by coating a negative electrode slurry composition, which is prepared by dissolving or dispersing optionally the binder and the conductive agent as well as the negative electrode active material in a solvent, on the negative electrode current collector and drying the coated negative electrode current collector, or may be prepared by casting the negative electrode slurry composition on a separate support and then laminating a film separated from the support on the negative electrode current collector.

Meanwhile, in the lithium secondary battery, the separator separates the negative electrode and the positive electrode and provides a movement path of lithium ions, and any separator may be used as the separator without particular limitation as long as it is typically used as a separator in a lithium secondary battery, and particularly, a separator having high moisture-retention ability for an electrolyte solution as well as low resistance to the transfer of electrolyte ions may be preferable. Specifically, a porous polymer film, for example, a porous polymer film prepared from a polyolefin-based polymer, such as an ethylene homopolymer, a propylene homopolymer, an ethylene/butene copolymer, an ethylene/hexene copolymer, and an ethylene/methacrylate copolymer, or a laminated structure having two or more layers thereof may be used. Also, a typical porous non-woven fabric, for example, a non-woven fabric formed of high melting point glass fibers or polyethylene terephthalate fibers may be used. Furthermore, a coated separator including a ceramic component or a polymer material may be used in order to secure heat resistance or mechanical strength, and the separator having a single-layered or multi-layered structure may be optionally used.

Also, the electrolyte used in the present invention may include an organic liquid electrolyte, an inorganic liquid electrolyte, a solid polymer electrolyte, a gel-type polymer electrolyte, a solid inorganic electrolyte, or a molten-type inorganic electrolyte which may be used in the preparation of the lithium secondary battery, but the present invention is not limited thereto.

Specifically, the electrolyte may include an organic solvent and a lithium salt.

Any organic solvent may be used as the organic solvent without particular limitation so long as it may function as a medium through which ions involved in an electrochemical reaction of the battery may move. Specifically, an ester-based solvent such as methyl acetate, ethyl acetate, γ-butyrolactone, and ε-caprolactone; an ether-based solvent such as dibutyl ether or tetrahydrofuran; a ketone-based solvent such as cyclohexanone; an aromatic hydrocarbon-based solvent such as benzene and fluorobenzene; or a carbonate-based solvent such as dimethyl carbonate (DMC), diethyl carbonate (DEC), methylethyl carbonate (MEC), ethylmethyl carbonate (EMC), ethylene carbonate (EC), and propylene carbonate (PC); an alcohol-based solvent such as ethyl alcohol and isopropyl alcohol; nitriles such as R-CN (where R is a linear, branched, or cyclic C2-C20 hydrocarbon group and may include a double-bond aromatic ring or ether bond); amides such as dimethylformamide; dioxolanes such as 1,3-dioxolane; or sulfolanes may be used as the organic solvent. Among these solvents, the carbonate-based solvent may be used, and, for example, a mixture of a cyclic carbonate (e.g., ethylene carbonate or propylene carbonate) having high ionic conductivity and high dielectric constant, which may increase charge/discharge performance of the battery, and a low-viscosity linear carbonate-based compound (e.g., ethylmethyl carbonate, dimethyl carbonate, or diethyl carbonate) may be used.

The lithium salt may be used without particular limitation as long as it is a compound capable of providing lithium ions used in the lithium secondary battery. Specifically, anions of the lithium salt may be at least one selected from the group consisting of F⁻, Cl⁻, Br⁻, I⁻, NO₃⁻, N(CN)₂⁻, BF₄⁻, CF₃CF₂SO₃⁻, (CF₃SO₂)₂N⁻, (FSO₂)₂N⁻, CF₃CF₂(CF₃)₂CO⁻, (CF₃SO₂)₂CH⁻, (SF₅)₃C⁻, (CF₃SO₂)₃C⁻, CF₃(CF₂)₇SO₃⁻, CF₃CO₂⁻, CH₃CO₂⁻, SCN⁻, and (CF₃CF₂SO₂)₂N⁻, and as the lithium salt, LiPF₆, LiClO₄, LiAsF₆, LiBF₄, LiSbF₆, LiAlO₄, LiAlCl₄, LiCF₃SO₃, LiC₄F₉SO₃, LiN(C₂F₅SO₃)₂, LiN(C₂F₅SO₂)₂, LiN(CF₃SO₂)₂, LiCl, LiI, LiB(C₂O₄)₂, or the like may be used. It is preferable to use the lithium salt in a concentration range of 0.1 M to 4.0 M, preferably, 0.5 M to 3.0 M, and more preferably, 1.0 M to 2.0 M. When the concentration of the lithium salt is included within the above range, the electrolyte may have suitable conductivity and viscosity, thereby exhibiting excellent performance, and lithium ions may effectively move.

In order to improve life characteristics of the battery, suppress the reduction in battery capacity, and improve discharge capacity of the battery, at least one additive, for example, a halo-alkylene carbonate-based compound such as difluoroethylene carbonate, pyridine, triethylphosphite, triethanolamine, cyclic ether, ethylenediamine, n-glyme, hexaphosphorictriamide, a nitrobenzene derivative, sulfur, a quinone imine dye, N-substituted oxazolidinone, N,N-substituted imidazolidine, ethylene glycol dialkyl ether, an ammonium salt, pyrrole, 2-methoxy ethanol, or aluminum trichloride, may be further included in the electrolyte in addition to the electrolyte components. In this case, the additive may be included in an amount of 0.1 wt% to 10.0 wt% based on a total weight of the electrolyte.

As described above, the lithium secondary battery including the positive electrode active material according to the present invention may have a capacity retention of at least 88%, at least 88.8%, or 88.8% to 99% after charging and discharging 50 cycles when charging the lithium secondary battery to 4.25 V at 0.5 C at 45 °C and discharging it to 3.0 V at 1.0 C are set as one cycle.

As described above, since the lithium secondary battery including the positive electrode active material according to the present invention stably exhibits excellent discharge capacity, output characteristics, and capacity retention, the lithium secondary battery is suitable for portable devices, such as mobile phones, notebook computers, and digital cameras, and electric cars such as hybrid electric vehicles (HEVs).

Thus, according to another embodiment of the present invention, a battery module including the lithium secondary battery as a unit cell and a battery pack including the battery module are provided.

The battery module or the battery pack may be used as a power source of at least one medium and large sized device of a power tool; electric cars including an electric vehicle (EV), a hybrid electric vehicle (HEV), and a plug-in hybrid electric vehicle (PHEV); or a power storage system.

Hereinafter, examples of the present invention will be described in detail in such a manner that it may easily be carried out by a person with ordinary skill in the art to which the present invention pertains. The invention may, however, be embodied in many different forms and should not be construed as being limited to the examples set forth herein.

### Examples and Comparative Example

### Example 1

Ni_{0.90}Co_{0.06}Mn_{0.04}(OH)₂ as a positive electrode active material precursor and LiOH as a lithium raw material were mixed in a molar ratio of 1:1, and then the mixture was fired at 810 °C for 12 hours.

Thereafter, the fired product was pulverized under the conditions of 2.5 bar and 1,400 rpm for 1 hour to prepare LiNi_{0.90}Co_{0.06}Mn_{0.04}O₂ as a positive electrode active material.

### Reference Example 2

A positive electrode active material was prepared in the same manner as in Example 1, except that the mixture was fired at 815 °C for 12 hours and the fired product was pulverized under the conditions of 2.5 bar and 1,800 rpm for 1 hour.

### Example 3

A positive electrode active material was prepared in the same manner as in Example 1, except that the mixture was fired at 810 °C for 15 hours and the fired product was pulverized under the conditions of 2.5 bar and 2,400 rpm for 1 hour.

### Comparative Example 1

A positive electrode active material was prepared in the same manner as in Example 1, except that the mixture was fired at 830 °C for 6 hours and the fired product was pulverized under the conditions of 3.0 bar and 800 rpm for 1 hour.

### Comparative Example 2

A positive electrode active material was prepared in the same manner as in Example 1, except that the mixture was fired at 840 °C for 6 hours and the fired product was pulverized under the conditions of 3.0 bar and 800 rpm for 1 hour.

### Comparative Example 3

A positive electrode active material was prepared in the same manner as in Example 1, except that the mixture was fired at 750 °C for 12 hours and the fired product was pulverized under the conditions of 2.0 bar and 1,600 rpm for 1 hour.

### Comparative Example 4

A positive electrode active material was prepared in the same manner as in Example 1, except that the mixture was fired at 810 °C for 12 hours and the fired product was pulverized under the conditions of 2.5 bar and 800 rpm for 1 hour.

### Experimental Example 1: Particle Size Distribution of Positive Electrode Active Material

The positive electrode active material (0.005 g) prepared in each of Examples 1 and 3, Reference Example 2 and Comparative Examples 1 to 4 was dispersed in H₂O as a dispersion medium, and then introduced into a commercially available laser diffraction particle size measuring apparatus (*e.g.,* Microtrac MT 3000), irradiated with an ultrasonic wave of about 28 kHz at a 60-W output to obtain a volume cumulative particle size distribution graph of each positive electrode active material, and D₉₀, D₅₀, D₁₀, and the NSF values of Equation 1 below were calculated using the graph. [Equation 1] $NSF = \left({D}_{50}-{D}_{10}\right) / {I}_{max}$

In Equation 1 above, D₅₀ is a particle diameter at a cumulative volume of 50% in a volume cumulative particle size distribution graph of the positive electrode active material, D₁₀ is a particle diameter at a cumulative volume of 10% in a volume cumulative particle size distribution graph of the positive electrode active material, and Iₘₐₓ is a maximum volume fraction in the volume cumulative particle size distribution graph of the positive electrode active material.

The results are shown in Table 1 below.

**[Table 1]**

| | D₉₀ [µm] | D₅₀ [µm] | D₁₀ [µm] | NSF |
|---|---|---|---|---|
| Example 1 | 10.2 | 5.41 | 2.80 | 0.27 |
| Reference Example 2 | 10.4 | 6.04 | 2.30 | 0.23 |
| Example 3 | 10.8 | 6.10 | 2.57 | 0.34 |
| Comparative Example 1 | 6.55 | 3.96 | 2.28 | 0.15 |
| Comparative Example 2 | 7.06 | 4.66 | 3.19 | 0.13 |
| Comparative Example 3 | 12.6 | 8.16 | 4.86 | 0.25 |
| Comparative Example 4 | 8.63 | 5.64 | 3.65 | 0.14 |

### Experimental Example 2: Tap density of Positive Electrode Active Material

A tap density of the positive electrode active material prepared in each of Examples 1 and 3, Reference Example 2 and Comparative Examples 1 to 4 was measured using a tap density tester (Micromeritics GeoPyc 1365).

Specifically, a 45-cc container was filled with 10 g of the positive electrode active material prepared in each of Examples 1 and 3, Reference Example 2 and Comparative Examples 1 to 4, and then was vibrated until a force of 108 N was applied horizontally to measure a tap density. Measurement results are shown in Table 2 below.

**[Table 2]**

| | Tap density [g/cc] |
|---|---|
| Example 1 | 2.53 |
| Reference Example 2 | 2.57 |
| Example 3 | 2.48 |
| Comparative Example 1 | 2.29 |
| Comparative Example 2 | 1.99 |
| Comparative Example 3 | 2.37 |
| Comparative Example 4 | 2.34 |

Referring to Table 2 above, it may be seen that the positive electrode active materials of Examples 1 and 3, Reference Example 2 have higher tap density than the positive electrode active materials of Comparative Examples 1 to 4.

### Experimental Example 3: Viscosity of Positive Electrode Slurry

### <Method for Preparing Positive Electrode Slurry>

The positive electrode active material prepared in each of Examples 1 and 3, Reference Example 2 and Comparative Examples 1 to 4, a carbon black conductive agent, and a polyvinylidene fluoride (PVDF) binder were mixed in a weight ratio of 97.0:1.5:1.5 in N-methylpyrrolidone (NMP) to prepare a positive electrode slurry having a solid content of 71 wt%.

The viscosity of the positive electrode slurry was measured by using a viscometer (BROOKFIFLD DV2TLVTJ0). Specifically, a brown 10-mL vial was filled with the positive electrode slurry, and then the viscosity was measured at a shear speed of 16 rpm using spindle 25 at 40 °C. Measurement results are shown in Table 3.

**[Table 3]**

| | Viscosity [cp] |
|---|---|
| Example 1 | 4160 |
| Reference Example 2 | 4190 |
| Example 3 | 3150 |
| Comparative Example 1 | 5325 |
| Comparative Example 2 | 16010 |
| Comparative Example 3 | 2895 |
| Comparative Example 4 | 3135 |

Referring to Table 3, it may be seen that the positive electrode slurry including the positive electrode active material prepared in each of Examples 1 and 3 and Reference Example 2 having D₉₀ and NSF values falling within the claims has a viscosity lower than that of the positive electrode slurry including the positive electrode active material prepared in each of Comparative Examples 1 and 2 in which both D₉₀ and NSF values do not satisfy the claims. It may be seen that the positive electrode slurries including the positive electrode active materials prepared in Comparative Examples 3 in which the NSF value falls within the claims but the D₉₀ does not fall within the claims, and Comparative Example 4 in which the D₉₀ falls within the claims but the NSF value does not fall within the claims have a relatively low tap density as described in Experimental Example 2, and also have a very high resistance increase rate of the lithium secondary battery as described below in Experimental Example 4.

### Experimental Example 4: Electrochemical Properties of Lithium Secondary Battery

With regard to the lithium secondary battery coin half-cell manufactured as below by using the positive electrode active material prepared in each of Examples 1 and 3, Reference Example 2 and Comparative Examples 1 to 4, the capacity retention (%) and the resistance increase rate (%) were measured. Measurement results are shown in Table 4.

Specifically, the lithium secondary battery coin half-cell was manufactured as follows.

Each positive electrode slurry prepared in Experimental Example 3 was applied on one surface of an aluminum current collector, dried at 130 °C, and then rolled to prepare a positive electrode.

Lithium metal was used as a negative electrode.

An electrode assembly was prepared by interposing a separator between the positive electrode and the negative electrode, and then the electrode assembly was placed inside a battery case, and then an electrolyte solution was injected into the case to manufacture a battery cell. The electrolyte solution was prepared by dissolving 1 M LiPF₆ in the mixed organic solvent in which ethylene carbonate (EC), dimethyl carbonate (DMC), and diethyl carbonate (DEC) were mixed in a volume ratio of 1:1:1, and adding 5 wt% of vinylene carbonate (VC) thereto.

With regard to the lithium secondary battery coin half-cell including the positive electrode active material prepared in each of Examples 1 and 3, Reference Example 2 and Comparative Examples 1 to 4, the capacity retention (%) and the resistance increase rate (%) were measured at the 50th cycle when charging and discharging the half-cell to 3.0-4.25 V at 0.5 C/1.0 C at 45 °C are set as one cycle.

**[Table 4]**

| | Capacity retention [%] | Resistance increase rate [%] |
|---|---|---|
| Example 1 | 89.54 | 84.32 |
| Reference Example 2 | 90.22 | 100.04 |
| Example 3 | 89.64 | 84.33 |
| Comparative Example 1 | 88.85 | 98.40 |
| Comparative Example 2 | 89.60 | 91.60 |
| Comparative Example 3 | 91.80 | 97.71 |
| Comparative Example 4 | 87.71 | 104.23 |

## Claims

1. A positive electrode active material comprising a lithium nickel-based oxide which is a single particle composed of one single nodule, a quasi-single particle which is a composite formed of at most 30 nodules, or a combination thereof, wherein the nodule is a single crystal which lacks a crystalline grain boundary or a polycrystal having no grain boundary in appearance when observed in the view at a magnification of 5,000 to 20,000 using a scanning electron microscope (SEM),
wherein the positive electrode active material has a D₉₀ of 8.0 µm to 11.5 µm, and a negative skewness factor (NSF) represented by Equation 1 below is 0.20 to 0.35: [Equation 1] $NSF = \left({D}_{50}-{D}_{10}\right) / {I}_{max}$
wherein, in Equation 1 above, D₅₀ is a particle diameter at a cumulative volume of 50% in a volume cumulative particle size distribution graph of the positive electrode active material, D₁₀ is a particle diameter at a cumulative volume of 10% in a volume cumulative particle size distribution graph of the positive electrode active material, and Iₘₐₓ is a maximum volume fraction in the volume cumulative particle size distribution graph of the positive electrode active material,
wherein the D₁₀, D₅₀ and D₉₀ are measured using a laser diffraction method as specified in the description, wherein the positive electrode active material has a D₅₀ of 5.0 µm to 7.0 µm, and wherein the positive electrode active material has a D₁₀ of 2.5 µm to 3.1 µm.

2. The positive electrode active material of claim 1, wherein the lithium nickel-based oxide is represented by Formula 1 below:
[Formula 1] Li_{1 +x}NiₐCo_{b}M¹_{c}M²_{d}O₂
wherein in Formula 1 above, M¹ is Mn, Al, or a combination thereof, M² is at least one selected from the group consisting of Ba, Ca, Zr, Ti, Mg, Ta, Nb, and Mo, 0≤x≤0.50, 0.80≤a<1.00,0<b<0.20, 0<c<0.20, and 0≤d≤0.20.

3. The positive electrode active material of claim 2, wherein in Formula 1 above, 0.83≤a<1.00, 0<b<0.17, 0<c<0.17, and 0≤d≤0.17.

4. The positive electrode active material of claim 1, wherein the positive electrode active material has a tap density of at least 2.32 g/cc as measured using a tap density tester as specified in the description.

5. A positive electrode slurry comprising the positive electrode active material of any one of claims 1 to 4.

6. The positive electrode slurry of claim 5, wherein the positive electrode slurry has a solid content of 65 wt% to 75 wt%.

7. The positive electrode slurry of claim 5, wherein the positive electrode slurry has a viscosity of 2,000 cp to 5,000 cp as measured at a shear speed of 16 rpm at 40 °C using a viscometer as specified in the description.

8. A positive electrode comprising the positive electrode active material of any one of claims 1 to 4.

9. A lithium secondary battery comprising the positive electrode of claim 8.

10. The lithium secondary battery of claim 9, wherein the lithium secondary battery has a capacity retention of at least 88% after charging and discharging for 50 cycles when charging the lithium secondary battery to 4.25 V at 0.5 C at 45 °C and discharging the same to 3.0 V at 1.0 C are set as one cycle.

## Patentansprüche

1. Positivelektrodenaktivmaterial, umfassend ein Oxid auf Lithium-Nickel-Basis, welches ein Einzelpartikel, das aus einem einzigen Knötchen aufgebaut ist, ein Quasi-Einzelpartikel, welches ein aus höchstens 30 Knötchen gebildeter Verbund ist, oder um eine Kombination davon ist, wobei das Knötchen ein Einkristall ohne kristalline Korngrenze oder ein Polykristall ist, bei Betrachtung bei einer Vergrößerung von 5.000 bis 20.000 unter Verwendung eines Rasterelektronenmikroskops (REM),
wobei das Positivelektrodenaktivmaterial einen D₉₀-Wert von 8,0 µm bis 11,5 µm aufweist und ein negativer Schiefe-Faktor (NSF), der durch die nachstehende Gleichung 1 dargestellt wird, 0,20 bis 0,35 beträgt: [Gleichung 1] $NSF = \left({D}_{50}-{D}_{10}\right) / {I}_{max}$
worin, in der obigen Gleichung 1, D₅₀ der Partikeldurchmesser bei einem kumulativen Volumen von 50% in einem volumenkumulativen Partikelgrößenverteilungsdiagramm des Positivelektrodenaktivmaterials ist, D₁₀ der Partikeldurchmesser bei einem kumulativen Volumen von 10% in einem volumenkumulativen Partikelgrößenverteilungsdiagramm des Positivelektrodenaktivmaterials ist, und Iₘₐₓ der maximale Volumenanteil in dem volumenkumulativen Partikelgrößenverteilungsdiagramm des Positivelektrodenaktivmaterials ist,
wobei D₁₀, D₅₀ und D₉₀ unter Verwendung eines Laserdiffraktionsverfahrens gemessen werden, wie in der Beschreibung angegeben, wobei das Positivelektrodenaktivmaterial einen D₅₀-Wert von 5,0 µm bis 7,0 µm aufweist, und wobei das Positivelektrodenaktivmaterial einen D₁₀-Wert von 2,5 µm bis 3,1 µm aufweist.

2. Positivelektrodenaktivmaterial gemäß Anspruch 1, wobei das Oxid auf Lithium-Nickel-Basis durch die nachstehende Formel 1 dargestellt wird:
[Formel 1] Li₁₊ₓNiₐCo_{b}M¹_{c}M²_{d}O₂
worin, in der obigen Formel 1, M¹ Mn, Al oder eine Kombination davon ist, M² mindestens ein Element ausgewählt aus der Gruppe bestehend aus Ba, Ca, Zr, Ti, Mg, Ta, Nb und Mo ist, 0 ≤ x ≤ 0,50, 0,80 ≤ a < 1,00, 0 < b < 0,20, 0 < c < 0,20 und 0 ≤ d ≤ 0,20.

3. Positivelektrodenaktivmaterial gemäß Anspruch 2, wobei in der obigen Formel 1 0,83 ≤ a < 1,00, 0 < b < 0,17, 0 < c < 0,17 und 0 ≤ d ≤ 0,17.

4. Positivelektrodenaktivmaterial gemäß Anspruch 1, wobei das Positivelektrodenaktivmaterial eine Schüttdichte von mindestens 2,32 g/cm³ aufweist, gemessen mit einem Schüttdichtemessgerät, wie in der Beschreibung angegeben.

5. Positivelektrodenaufschlämmung, die das Positivelektrodenaktivmaterial gemäß mindestens einem der Ansprüche 1 bis 4 umfasst.

6. Positivelektrodenaufschlämmung gemäß Anspruch 5, wobei die Positivelektrodenaufschlämmung einen Feststoffgehalt von 65 Gew.-% bis 75 Gew.-% aufweist.

7. Positivelektrodenaufschlämmung nach Anspruch 5, wobei die Positivelektrodenaufschlämmung eine Viskosität von 2.000 cp bis 5.000 cp aufweist, gemessen bei einer Schergeschwindigkeit von 16 U/min bei 40°C unter Verwendung eines Viskosimeters, wie in der Beschreibung angegeben.

8. Positive Elektrode, die das Positivelektrodenaktivmaterial gemäß mindestens einem der Ansprüche 1 bis 4 umfasst.

9. Lithium-Sekundärbatterie, die die positive Elektrode gemäß Anspruch 8 umfasst.

10. Lithium-Sekundärbatterie gemäß Anspruch 9, wobei die Lithium-Sekundärbatterie nach 50 Lade- und Entladezyklen eine Kapazitätserhaltung von mindestens 88% aufweist, wenn das Laden der Lithium-Sekundärbatterie auf 4,25 V bei 0,5 C und 45°C sowie das Entladen derselben auf 3,0 V bei 1,0 C als einen Zyklus definiert sind.

## Revendications

1. Matériau actif d'électrode positive comprenant un oxyde à base de lithium-nickel qui est une particule unique composée d'un nodule unique, une particule quasi-unique qui est un composite formé d'au plus 30 nodules, ou une combinaison de ceux-ci, dans lequel le nodule est un monocristal dépourvu de limite de grain cristallin ou un polycristal ne présentant pas de limite de grain apparente lorsqu'il est observé dans la vue à un grossissement de 5 000 à 20 000 au moyen d'un microscope électronique à balayage (SEM),
dans lequel le matériau actif d'électrode positive présente un D₉₀ de 8,0 µm à 11,5 µm, et un facteur d'asymétrie négatif (NSF) représenté par l'Équation 1 ci-dessous est de 0,20 à 0,35 : [Équation 1] $NSF = \left({D}_{50}-{D}_{10}\right) / {I}_{max}$
dans lequel, dans l'Équation 1 ci-dessus, D₅₀ est un diamètre de particule à un volume cumulé de 50 % dans un graphique de répartition granulométrique cumulative en volume du matériau actif d'électrode positive, D₁₀ est un diamètre de particule à un volume cumulé de 10 % dans un graphique de répartition granulométrique cumulative en volume du matériau actif d'électrode positive, et Iₘₐₓ est une fraction volumique maximale dans le graphique de répartition granulométrique cumulative en volume du matériau actif d'électrode positive,
dans lequel les D₁₀, D₅₀ et D₉₀ sont mesurés au moyen d'un procédé de diffraction laser comme spécifié dans la description, dans lequel le matériau actif d'électrode positive présente un D₅₀ de 5,0 µm à 7,0 µm, et dans lequel le matériau actif d'électrode positive présente un D₁₀ de 2,5 µm à 3,1 µm.

2. Matériau actif d'électrode positive selon la revendication 1, dans lequel l'oxyde à base de lithium-nickel est représenté par la Formule 1 ci-dessous :
[Formule 1] Li₁₊ₓNiₐCo_{b}M¹_{c}M²_{d}O₂
dans lequel, dans la Formule 1 ci-dessus, M¹ est Mn, Al, ou une combinaison de ceux-ci, M² est au moins un élément sélectionné dans le groupe constitué de Ba, Ca, Zr, Ti, Mg, Ta, Nb et Mo, 0≤x≤0,50, 0,80≤a<1,00, 0<b<0,20, 0<c<0,20, et 0≤d≤0,20.

3. Matériau actif d'électrode positive selon la revendication 2, dans lequel, dans la Formule 1 ci-dessus, 0,83≤a<1,00, 0<b<0,17, 0<c<0,17, et 0≤d≤0,17.

4. Matériau actif d'électrode positive selon la revendication 1, dans lequel le matériau actif d'électrode positive présente une densité après tassement d'au moins 2,32 g/cm³ telle que mesurée au moyen d'un appareil de mesure de densité après tassement comme spécifié dans la description.

5. Suspension d'électrode positive comprenant le matériau actif d'électrode positive selon l'une quelconque des revendications 1 à 4.

6. Suspension d'électrode positive selon la revendication 5, dans laquelle la suspension d'électrode positive présente une teneur en solides de 65 % en poids à 75 % en poids.

7. Suspension d'électrode positive selon la revendication 5, dans laquelle la suspension d'électrode positive présente une viscosité de 2 000 cp à 5 000 cp telle que mesurée à une vitesse de cisaillement de 16 rpm à 40 °C au moyen d'un viscosimètre comme spécifié dans la description.

8. Électrode positive comprenant le matériau actif d'électrode positive selon l'une quelconque des revendications 1 à 4.

9. Batterie secondaire au lithium comprenant l'électrode positive selon la revendication 8.

10. Batterie secondaire au lithium selon la revendication 9, dans laquelle la batterie secondaire au lithium présente une rétention de capacité d'au moins 88 % après charge et décharge pendant 50 cycles lorsque la charge de la batterie secondaire au lithium à 4,25 V à 0,5 C à 45 °C et la décharge de celle-ci à 3,0 V à 1,0 C sont définies comme un cycle.
